# EUROPÄISCHE PATENTSCHRIFT

(11) **EP 0 844 924 B1**
(45) Veröffentlichungstag und Bekanntmachung des Hinweises auf die Patenterteilung: **29.03.2000**
(21) Anmeldenummer: 96929255.6
(22) Anmeldetag: 14.08.1996
(51) Int. Cl.: B29C 47/00, B29C 47/50

(54) **VERFAHREN ZUM HERSTELLEN EINES COMPOUNDS AUS EINEM KUNSTSTOFF MIT FESTER FASEREINLAGE**
METHOD OF PRODUCING A COMPOUND COMPRISING A PLASTIC CONTAINING REINFORCEMENT FIBRES
PROCEDE DE PRODUCTION D'UNE COMPOSITION CONSTITUEE D'UNE MATIERE PLASTIQUE CONTENANT DES FIBRES DE RENFORCEMENT

(30) Priorität: 16.08.1995 DE 19530020
(43) Veröffentlichungstag der Anmeldung: 03.06.1998
(73) Patentinhaber: Menzolit-Fibron GmbH, 75015 Bretten (DE)
(72) Erfinder: BRÜSSEL, Richard, D-75056 Sulzfeld (DE); KÜHFUSZ, Rudolf, D-75053 Gondelsheim (DE)
(74) Vertreter: Scherzberg, Andreas, Dr.
(86) Internationale Anmeldenummer: EP9603588
(87) Internationale Veröffentlichungsnummer: WO9706936

(56) Entgegenhaltungen:
- EP-A- 0 339 906
- DE-A- 2 357 112
- FR-A- 1 530 229
- US-A- 5 110 275
- US-A- 5 476 628
- PATENT ABSTRACTS OF JAPAN vol. 016, no. 007 (M-1198), 9.Januar 1992 & JP,A,03 230943 (POLYPLASTICS CO), 14.Oktober 1991,

## Beschreibung

Die Erfindung betrifft ein Verfahren zum Herstellen eines Compounds aus einem Kunststoff mit fester Fasereinlage nach dem Oberbegriff des Anspruchs 1.

Aus der EP 0 416 859 B1 ist eine Extrudiervorrichtung und ein Verfahren zum Mischen von Fasern und thermoplastischen Kunststoffen bekannt. Hierzu werden in einem Schnecken-Extruder thermoplastische Kunststoffe und diskrete Längen von Verstärkungsfasern eingegeben und vermischt. Nach einem längeren Mischweg gelangt das fertige Faser-Compound in eine Abschneide- und Handhabungseinheit und wird dort weiterverarbeitet.

Zusätzlich beschreibt der Beitrag "Direktverarbeitung von Endlosfasern auf Spritzgießmaschienen", F. Truckenmüller und H.-G. Fritz, Stuttgart, Autorenfortdruck aus der Zeitschrift Kunststoffe, 82. Jahrgang 1992, Carl Hanser Verlag, München, ein Verfahren der Bayer AG, Leverkusen, die Verstärkungsfasern als Endlosfasern, sogenannte Rovings, durch Direkteinzug in den Schnecken-Extruder einzubringen. Es wird demnach der thermoplastische Kunststoff und die trockenen Endlosfasern in den Extruder eingebracht, geschnitten und vermischt, bis nach einer längeren Mischstrecke das fertige Faser-Compound hergestellt ist. Zu diesem Verfahren existiert auch die EP 0 124 003 B1.

Beide Verfahren haben den gravierenden Nachteil, daß ein langer Weg zur Vermischung des Kunststoffes mit den Fasern nötig ist. Auf diesem langen Mischweg, welcher oft noch mit speziellen Knet- und Mischzonen ausgerüstet ist, werden die Fasern durch Scherkräfte im Extruder teilweise mehrfach gebrochen, so daß deren Länge am Ausgang des Extruders wesentlich kürzer als am Einlaß oder kurz danach ist. Im zitierten Beitrag "Direktverarbeitung von Endlosfasern auf Spritzgießmaschinen" wird der Hauptanteil der Faserlänge im fertigen Faser-Coumpound mit 1 bis 2 mm angegeben. Dies ist jedoch für einen faserverstärkten Compound mit hoher Bruchfestigkeit zu wenig.

Die gattungsgemäße US-A-5 110 275 offenbart ein Verfahren zum Herstellen eines Compounds aus einem Kunststoff mit fester Fasereinlage. Vor dem Eintritt der Endlosfasern in den Extruder werden diese mit dem Kunststoff getränkt. Hierzu ist der Extruder bzw. sein Gehäuse im Bereich des Eintritts verändert worden. Es kann demnach kein handelsüblicher Extruder verwendet werden. Außerdem ist der Tränkweg der Endlosfasern beschränkt.

Der Erfindung liegt daher die Aufgabe zugrunde, ein Verfahren zum Herstellen eines Compounds aus einem Kunststoff mit fester Fasereinlage nach dem Oberbegriff des Anspuchs 1 anzugeben, mit dem im fertigen Compound ein überwiegender Anteil an Langfasern mit einer Faserlänge von 10 bis 50 mm zu erreichen ist.

Erfindungsgemäß wird diese Aufgabe dadurch gelöst, daß die Endlosfasern in einem separat vom Schnecken-Extruder angeordneten Tränkwerkzeug mit dem Kunststoff getränkt werden.

Durch das Tränken der Endlosfasern in dem Tränkwerkzeug führen die Endlosfasern bei Eintritt in den Extruder gleich den nötigen Kunststoff mit sich. Es entfällt daher, wie im Stand der Technik, die Mischung des Kunststoffes mit den Endlosfasern im Extruder bzw. der Tränkweg ist nicht beschränkt. Hierdurch erübrigt sich auch der lange Mischweg, da im Extruder die Endlosfasern lediglich noch zerschnitten und ein klein wenig vermischt werden müssen. Durch den Wegfall des langen Mischweges wird ein extrem hoher Anteil an Langfasern im fertigen Faser-Compound erreicht.

Als Tränkwerkzeug eignet sich jedes handelsübliche Gerät, wie es z.B. in der EP 0 287 427 B1 beschrieben ist. Es sind jedoch auch andere Tränkverfahren vorteilhaft. Zur besseren Benetzung mit dem Kunststoff werden die Endlosfasern bevorzugt vorgeheizt in das Tränkwerkzeug eingeführt.

Als Kunststoff wird erfindungsgemäß vorteilhafterweise ein Thermoplast, bevorzugt Polypropylen verwendet. Alternativ kann als Kunststoff auch ein duroplastischer Flüssigkunststoff, bevorzugt ein Polyesterharz verwendet werden. Bei der Verwendung von duroplastischen Flüssigkunststoffen entfällt das Vorheizen der Endlosfasern.

Um das richtige Mischungsverhältnis zwischen Fasern und Kunststoff zu erhalten, wird dem an sich fertigen Faser-Compound aufgeschmolzene Recyclatchips und/oder zusätzlich aufgeschmolzener Kunststoff zugegeben. Recyclatchips fallen bei der Herstellung der Formteile an und waren bisher ein Abfallstoff.

Bevorzugt ist hierzu der Auslaß des Extruders mit einem Einlaß eines zweiten Schnecken-Extruders verbunden, wobei der zweite Extruder in Strömungsrichtung vor dem Einlaß aufgeschmolzene Recyclatchips und/oder Kunststoff fördert.

Zu allerletzt wird das fertige Faser-Compound einer bekannten Plastifikatabschneide- und Handhabungseinheit zugeführt.

In bevorzugter Ausführungsform sind die Endlosfasern Glasfasern.

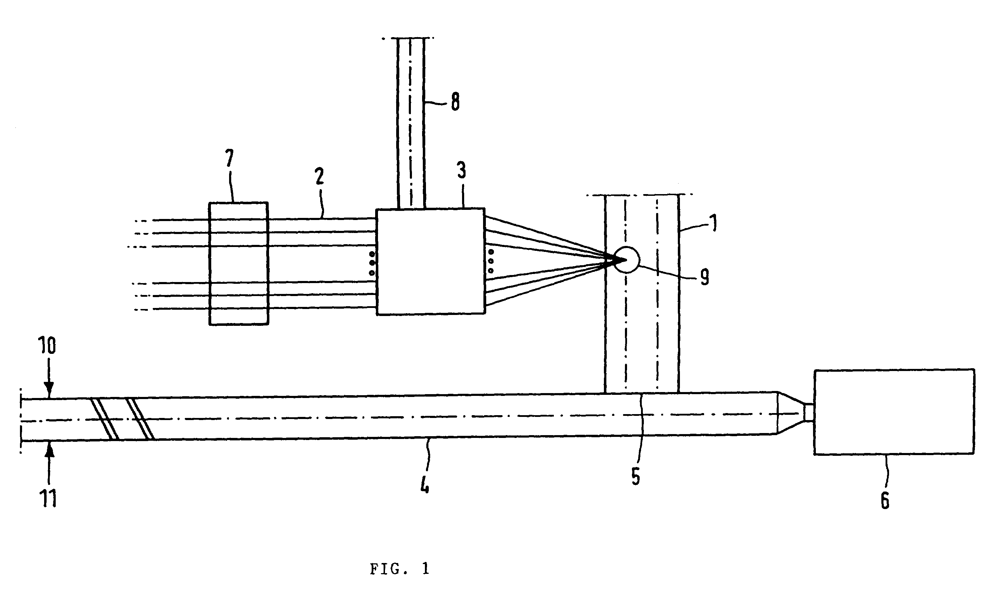

Weitere Merkmale der Erfindung ergeben sich aus der Figur, die ein Ausführungsbeispiel zeigt und nachfolgend eingehend beschrieben wird.

Mit dem Bezugszeichen 2 sind Endlosfasern, hier Glasfasern, bezeichnet, die von nicht gezeigten Spulen abgewickelt werden. Nachdem die Endlosfasern 2 die Heizung 7 durchlaufen haben, gelangen sie in ein Tränkwerkzeug 3, wo sie mit Polypropylen getränkt werden. Das Polypropylen wird über einen Schnecken-Extruder 8 in das Tränkwerkzeug 3 gefördert, wo es die Endlosfasern 2 benetzt. Hinter dem Tränkwerkzeug 3 ist ein beheizter Schnecken-Extruder 1 angeordnet, der einen Einlaß 9 aufweist. Über diesen Einlaß 9 werden die nun mit Kunststoff getränkten Endlosfasern 2 in den Extruder 1 durch Direkteinzug selbsttätig eingezogen. Der Einzugsbereich des Extruders 1 ist so gestaltet, daß die Durchzugskräfte durch das Tränkwerkzeug auf die Endlosfasern aufgebracht werden können. Der Extruder 1 weist in diesem Beispiel eine Doppelschnecke auf. Es kann jedoch genauso gut ein Einschnecken-Extruder verwendet werden.

Im Extruder 1 werden die getränkten Endlosfasern 2 nach dem Einzugsbereich geschnitten und vermischt. Für diesen Prozeß ist jedoch nur ein kurzer Extruder 1 notwendig, da die Endlosfasern 2 den nötigen Kunststoff durch das vorgeschaltete Tränkwerkzeug 3 schon mitbringen. Der Einlaß 9 im Extruder 1 kann nicht verstopfen, da die Endlosfasern 2 die Einzugsbohrung permanent reinigen.

Der Auslaß des Extruders 1 ist mit einem Einlaß 5 eines zweiten Schnecken-Extruders 4 verbunden. Dieser Extruder 4 ist beispielhaft als Einschnecken-Extruder gezeichnet. In diesem zweiten Extruder 4 werden vor dem Einlaß 5 aufgeschmolzene Recyclatchips 10 und/oder Kunststoff 11 gefördert. Diese aufgeschmolzenen Recyclatchips oder Kunststoff vermischt sich dann mit dem Faser-Compound aus dem Extruder 1, wodurch der Faseranteil im Kunststoff exakt dosiert werden kann.

Das fertige Faser-Compound wird anschließend einem Plastifikatabschneide- und Handhabungsgerät 6 zugeführt.

## Patentansprüche

1. Verfahren zum Herstellen eines Compounds aus einem Kunststoff mit fester Fasereinlage, bestehend aus einem beheizten Schnecken-Extruder (1) in dem Endlosfasern (2) durch Selbsteinzug eingezogen, dort zerschnitten und vermischt und anschließend als fertiges Faser-Compound abgeführt werden, wobei die Endlosfasern (2) vor dem Eintritt in den Schnecken-Extruder (1) mit dem Kunststoff getränkt werden, **dadurch gekennzeichnet**, daß die Endlosfasern (2) in einem separat vom Schnecken-Extruder (1) angeordneten Tränkwerkzeug (3) mit dem Kunststoff getränkt werden.

2. Verfahren nach Anspruch 1, **dadurch gekennzeichnet**, daß als Kunststoff ein Thermoplast, bevorzugt Polypropylen verwendet wird.

3. Verfahren nach Anspruch 1, **dadurch gekennzeichnet**, daß als Kunststoff ein duroplastischer Flüssigkunststoff, bevorzugt ein Polyesterharz verwendet wird.

4. Verfahren nach Anspruch 1 oder 2, **dadurch gekennzeichnet**, daß die Endlosfasern (2) vorgeheizt in das Tränkwerkzeug (3) eingeführt werden.

5. Verfahren nach einem der Ansprüche 1 bis 4, **dadurch gekennzeichnet**, daß dem fertigen Faser-Compound aufgeschmolzene Recyclatchips und/oder zusätzlicher aufgeschmolzener Kunststoff zugegeben wird.

6. Verfahren nach Anspruch 5, **dadurch gekennzeichnet**, daß der Auslaß des Extruders (1) mit einem Einlaß (5) eines zweiten Schnecken-Extruders (4) verbunden ist und der zweite Extruder (4) in Strömungsrichtung vor dem Einlaß (5) aufgeschmolzene Recyclatchips und/oder Kunststoff fördert.

7. Verfahren nach einem der Ansprüche 1 bis 6, **dadurch gekennzeichnet**, daß das fertige Faser-Compound einer Plastifikatabschneide- und Handhabungseinheit (6) zugeführt wird.

8. Verfahren nach einem der Ansprüche 1 bis 7, **dadurch gekennzeichnet**, daß die Endlosfasern (2) Glasfasern sind.

## Claims

1. Method for producing a compound from a plastics material with fixed fibre inlay consisting of a heated screw-type extruder (1) in which filaments (2) are drawn by means of automatic drawing-in, are cut up and mixed there and are subsequently removed as a finished fibre compound, with the filaments (2) being impregnated with the plastics material before entering the screw-type extruder (1), characterized in that the filaments (2) are impregnated with the plastics material in an impregnation tool (3) arranged separately from the screw-type extruder (1).

2. Method according to claim 1, characterized in that a thermoplastic plastics material, preferably polypropylene, is used as plastics material.

3. Method according to claim 1, characterized in that a thermosetting liquid plastics material, preferably a polyester resin, is used as plastics material.

4. Method according to claim 1 or 2, characterized in that the filaments (2) are introduced preheated into the impregnation tool (3).

5. Method according to one of claims 1 to 4, characterized in that melted recycle chips and/or additional melted plastics material are added to the finished fibre compound.

6. Method according to claim 5, characterized in that the outlet of the extruder (1) is connected to an inlet (5) of a second screw-type extruder (4) and the second extruder (4) conveys melted recycle chips and/or plastics material in the flow direction in front of the inlet (5).

7. Method according to one of claims 1 to 6, characterized in that the finished fibre compound is supplied to a plasticized material cutting and handling unit (6).

8. Method according to one of claims 1 to 7, characterized in that the filaments (2) are glass fibres.

## Revendications

1. Procédé de production d'une composition constituée de matière plastique et de fibres de renforcement, suivant lequel des fibres sans fin (2) sont amenées par auto-tirage dans une extrudeuse à vis (1) chauffée, et y sont coupées et mélangées avec de la matière plastique pour quitter l'extrudeuse sous la forme d'une composition finie à renfort fibreux, les fibres sans fin (2) étant imprégnées par la matière plastique avant l'entrée dans l'extrudeuse à vis (1), caractérisé par le fait que les fibres sans fin (2) sont imprégnées par la matière plastique dans un outil d'imprégnation (3) disposé séparément de l'extrudeuse à vis (1).

2. Procédé suivant la revendication 1, caractérisé par le fait qu'on utilise en tant que matière plastique une matière thermoplastique, de préférence le polypropylène.

3. Procédé suivant la revendication 1, caractérisé par le fait qu'on utilise en tant que matière plastique une matière thermodurcissable, à l'état liquide, de préférence une résine polyester.

4. Procédé suivant la revendication 1 ou 2, caractérisé par le fait qu'on introduit les fibres sans fin (2) à l'état préchauffé dans l'outil d'imprégnation (3).

5. Procédé suivant l'une des revendications 1 à 4, caractérisé par le fait qu'on ajoute à la composition finie à renfort fibreux des copeaux de recyclage fondus et/ou de la matière plastique additionnelle fondue.

6. Procédé suivant la revendication 5, caractérisé par le fait que la sortie de l'extrudeuse (1) est reliée à une entrée (5) d'une deuxième extrudeuse à vis (4) et que la deuxième extrudeuse (4) transporte des copeaux de recyclage et/ou de la matière plastique amenés à l'état fondu avant d'arriver à ladite entrée (5).

7. Procédé suivant l'une des revendications 1 à 6, caractérisé par le fait que la composition finie à renfort fibreux est amenée à une unité (6) de coupe et de manipulation.

8. Procédé suivant l'une des revendications 1 à 7, caractérisé par le fait que les fibres sans fin (2) sont des fibres de verre.
